# DEMANDE DE BREVET EUROPEEN

(11) **EP 3 840 193 A1**
(43) Date de publication de la demande: **23.06.2021**
(21) Numéro de dépôt: 20215048.8
(22) Date de dépôt: 17.12.2020
(51) Int. Cl.: H02K 11/02, H02K 11/26, H02K 11/40

(54) **ALIMENTATION D'UNE CHARGE DANS UNE ARCHITECTURE ÉLECTRIQUE**

(30) Priorité: 20.12.2019 FR 1915038
(71) Demandeur: THALES, 92400 Courbevoie (FR)
(72) Inventeur: DUBOIS, Eric Ravindranath, 78400 CHATOU (FR); KHERBOUCHI, Hocine, 78400 CHATOU (FR); GUGUEN, Stéphane, 78400 CHATOU (FR); EL KORAICHI, Kamel, 78400 CHATOU (FR)
(74) Mandataire: Marks & Clerk France

(57) **Abrégé**

L'invention concerne le filtrage des hautes fréquences d'une charge (12) en forme de machine électrique dans une architecture électrique (10). La charge (12) est équipée de plusieurs bornes d'alimentation (14, 16, 18) permettant le raccordement de chaque borne au réseau électrique (20) par une ligne électrique (22). Associé à chacune des bornes d'alimentation (14, 16, 18), un conducteur électrique (24, 26, 28) isolé est raccordé à la première de ses extrémités (24a, 26a, 28a) à la borne considérée (14, 16, 18) et non-raccordé à la seconde de ses extrémités (24b, 26b, 28b) et lesdites conducteurs électriques (24,26,28) ayant une longueur supérieur ou égale à 1m pour atténuer les phénomènes haute fréquence évoqué par un convertisseur (30).

## Description

L'invention concerne l'alimentation d'une charge dans une architecture électrique. L'invention est bien adaptée à un réseau électrique embarqué à bord d'un véhicule. L'invention trouve une utilité particulière dans le domaine aéronautique où la tendance actuelle est d'augmenter le nombre d'équipements électriques et donc la puissance électrique embarquée.

Un avion comprend généralement un grand nombre de charges électriques alimentées par un réseau de fourniture électrique de bord. Par exemple, les commandes de vols de l'avion, les systèmes de climatisation et d'éclairage interne mettent en œuvre des machines électriques alternatives triphasées. L'énergie électrique fournie à ces machines provient de convertisseurs de puissance reliés à un réseau de bord délivrant de l'énergie électrique sous forme continue ou alternative. Le réseau de bord peut comprendre par exemple des générateurs électriques, des batteries de stockage, ou encore des moyens de liaison à un réseau d'alimentation électrique externe à l'avion et permettant l'alimentation électrique de l'avion lorsqu'il est stationné dans un aéroport. De façon courante à bord d'avion, on trouve des réseaux continus 27V, 540V et/ou des réseaux alternatifs 115V ou 230V 400Hz. De manière connue, les convertisseurs de puissance reçoivent de l'énergie du réseau de bord pour la convertir en énergie alternative polyphasée adaptée aux exigences en puissance et en fréquence de la charge. Lorsqu'un convertisseur est alimenté par un réseau alternatif, le convertisseur comprend par exemple un redresseur délivrant une tension continue suivi d'un onduleur produisant la tension alternative nécessaire à la charge à partir de la tension continue. Lorsqu'un convertisseur est alimenté par un réseau continu, le convertisseur comprend alors un circuit remplissant la fonction d'onduleur et produisant la tension alternative directement à partir de la tension continue du réseau de bord. Un convertisseur peut être dédié à une charge ou commun à plusieurs charges.

A bord d'un véhicule et notamment d'un aéronef, les convertisseurs sont généralement séparés des charges électriques alimentées. Cette séparation présente plusieurs avantages. Tout d'abord, la séparation permet une mutualisation des convertisseurs qui peuvent ainsi alimenter plusieurs charges différentes notamment lorsque les charges ne sont utilisées qu'épisodiquement. La mutualisation permet de réduire la masse embarquée à bord d'un aéronef. Ensuite, la fiabilité des convertisseurs et des charges peut être bien différente et pour assurer la maintenance de l'architecture, il est utile de pouvoir intervenir séparément sur un convertisseur et sur la charge qu'il alimente.

Les convertisseurs comprennent généralement des interrupteurs électroniques couplant le réseau de bord aux différentes phases alimentant la charge. Les interrupteurs électroniques sont par exemple transistors à effet de champ à grille isolée couramment appelés MOSFET pour leur abréviation anglo-saxonne (Metal Oxide Semiconductor Field Effect Transistor). On trouve également des transistors bipolaires à grille isolée couramment appelés IGBT, pour leur abréviation anglo-saxonne (Insulated Gate Bipolar Transistor).

Les interrupteurs, notamment lorsqu'ils sont mis en œuvre dans des onduleurs, hachent la tension qu'ils reçoivent. Le hachage entraine la présence de fronts raides pouvant entrainer la présence d'ondes stationnaires sur les conducteurs électriques reliant un convertisseur à la charge qu'il alimente. Cette onde stationnaire entraine des surtensions pouvant faire vieillir de façon prématurée la charge et les composants du convertisseur associé. Pour pallier ce problème, il est possible d'adoucir les fronts de tension générés dans le convertisseur. Cependant, cet adoucissement n'est pas souhaitable car il entraine des pertes au niveau des interrupteurs, un échauffement de ceci, et donc un vieillissement prématuré. Une solution alternative consiste à filtrer les ondes stationnaires, notamment au moyen d'inductances de puissance disposées sur les conducteurs électriques reliant le convertisseur et la charge alimentée. Ces inductances, et plus généralement ces filtres, présentent l'inconvénient d'augmenter la masse de l'architecture car toute la puissance alimentant la charge doit transiter par les filtres.

Parmi les technologies récentes d'interrupteurs électroniques, on peut citer des composants basés sur des matériaux tels que le carbure de silicium ou le nitrure galium avec lesquels on peut atteindre des durées de commutation extrêmement courtes. Avec ce type de technologie, il est possible de commuter plus de 50 Volts par nano seconde. Il est intéressant de mettre en œuvre ce type d'interrupteurs dans les convertisseurs afin de limiter les pertes par commutation. Cependant dès que l'on cherche à éloigner le convertisseur de la charge, des ondes stationnaires peuvent être générées sur la ligne reliant le convertisseur à la charge. Ces ondes stationnaires peuvent produire des surtensions que la charge peut avoir des difficultés à encaisser.

L'invention vise à pallier tout ou partie des problèmes cités plus haut en proposant, au niveau de la charge, un système d'adaptation passif de la ligne reliant le convertisseur à la charge. Le système est très simple à mettre en œuvre et ne consomme pas d'énergie..

A cet effet, l'invention a pour objet une architecture électrique comprenant une charge équipée de bornes d'alimentation permettant son raccordement à une ligne électrique de l'architecture. L'architecture électrique comprend, en complément du raccordement à la ligne électrique et associé à chacune des bornes d'alimentation, un conducteur électrique isolé raccordé à une première de ses extrémités à la borne considérée et non raccordé à une seconde de ses extrémités. Les conducteurs électriques isolés ont une longueur supérieure ou égale à 1m.

Autrement dit, les conducteurs électriques isolés forment une ligne ouverte sans aucun raccordement à leur seconde extrémité.

Les conducteurs électriques isolés ont avantageusement une section constante entre leurs deux extrémités respectives.

Les conducteurs électriques isolés ont avantageusement une longueur supérieure ou égale à 3m.

L'architecture électrique comprend avantageusement, associé à chacun des conducteurs électriques isolés, une inductance raccordée en série avec le conducteur électrique isolé considéré.

L'architecture électrique comprend avantageusement un noyau magnétique torique formé autour d'un évidement central. Les conducteurs électriques isolés traversent une ou plusieurs fois l'évidement central.

L'architecture électrique comprend avantageusement, en complément des conducteurs électriques isolés, au moins un condensateur raccordé aux bornes d'alimentation.

La charge peut être une machine électrique comprenant une carcasse statorique. Les conducteurs électriques isolés sont avantageusement enroulés autour de la carcasse.

Les conducteurs électriques isolés peuvent être formés de fils électriques isolés. Les isolants des différents fils électriques sont avantageusement sensiblement en contact les uns des autres sur la majeure partie de leur longueur.

Les conducteurs électriques isolés peuvent être regroupés au sein d'un câble.

e câble est avantageusement blindé et le blindage du câble est raccordé à une masse de l'architecture.

Les conducteurs électriques isolés peuvent être formés sur un circuit imprimé flexible.

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement un exemple général d'architecture électrique selon l'invention ;
la figure 2 représente plus précisément l'alimentation d'une charge par un onduleur ;
la figure 3 représente un premier mode de réalisation d'une architecture électrique selon l'invention ;
la figure 4 représente une variante du premier mode de réalisation ;
la figure 5 représente un câble regroupant plusieurs conducteurs pouvant être mis en œuvre dans le premier mode de réalisation ;
la figure 6 représente une première variante d'un circuit imprimé flexible mis en œuvre dans un second mode de réalisation d'une architecture électrique selon l'invention ;
la figure 7 représente une seconde variante d'un circuit imprimé flexible mis en œuvre dans le second mode de réalisation d'une architecture électrique selon l'invention.

Par souci de clarté, les mêmes éléments porteront les mêmes repères dans les différentes figures.

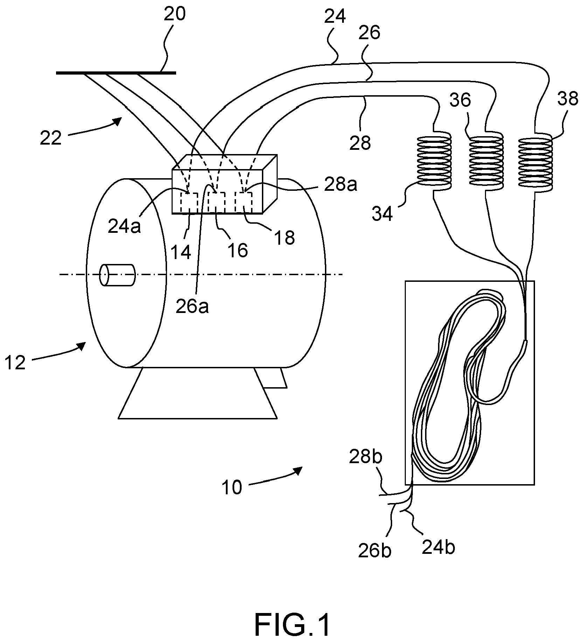

La figure 1 représente schématiquement une architecture électrique 10 comprenant une charge 12 formée d'une machine électrique triphasée. La machine électrique est ici un moteur tournant. Dans le cadre de l'invention, la machine électrique peut fonctionner aussi bien en moteur consommant de l'énergie électrique qu'en générateur alimentant un réseau électrique. Il est possible de mettre en œuvre l'invention avec toute autre type de charge avec ou sans partie tournante, quel que soit le nombre de phases et que la charge puisse fonctionner en générateur ou en consommateur d'énergie.

La charge 12 comprend trois bornes 14, 16 et 18, une pour chacune de ses phases. De façon plus générale, le nombre de bornes est adapté au nombre de phases. Il est possible de prévoir une borne supplémentaire pour raccorder le neutre de la charge en cas de besoin. Une charge monophasée comprendra généralement deux bornes. La charge 12 est raccordée à un réseau électrique 20 par l'intermédiaire d'une ligne électrique 22 permettant l'alimentation de la charge 12. Lorsque la charge régénère de l'énergie, celle-ci est transférée au réseau par le câble 22. Dans la liaison entre la charge 12 et le réseau 20, des composants tels que notamment des interrupteurs peuvent être disposés. De tels interrupteurs peuvent notamment être présents dans un convertisseur alimentant la charge 12.

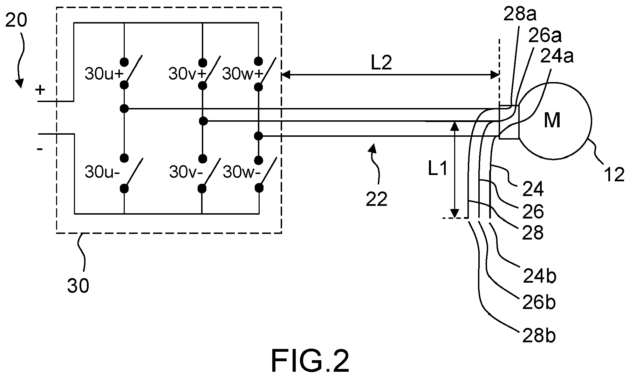

La figure 2 représente schématiquement un exemple de convertisseur 30, sous forme d'un onduleur, alimentant la charge 12 au travers de la ligne électrique 22. Le convertisseur 30 reçoit de l'énergie électrique du réseau 20 sous forme continu et fournit à la charge 12 de l'énergie électrique sous forme alternative triphasée. Le convertisseur 30 comprend trois paires d'interrupteurs électronique. La paire 30u+ et 30u- permet de générer une première phase u. La paire 30v+ et 30v-permet de générer une deuxième phase v et la paire 30w+ et 30w- permet de générer une troisième phase w. Entre le convertisseur 30 et la charge 12, la ligne électrique 22 possède une longueur L2. A partir de quelques mètres de longueur, on a constaté l'apparition d'ondes stationnaires peuvent apparaitre sur la ligne électrique 22. Ces phénomènes sont d'autant plus importants que les interrupteurs du convertisseur 30 possèdent des temps de commutation courts.. En complément de la ligne électrique 22 et indépendamment du raccordement de la charge 12 au réseau 20 un conducteur électrique isolé, respectivement 24, 26 et 28, est raccordé à chacune des bornes 14, 16 et 18. Le conducteur électrique 24 comprend deux extrémités 24a et 24b. L'extrémité 24a est raccordée à la borne 14 et l'extrémité 24b est non raccordée. Autrement dit, l'extrémité 24b est isolée de tout composant de l'architecture. Il en est de même pour les autres conducteurs. Le conducteur 26 est raccordé à la borne 16 en son extrémité 26a et non raccordé en son extrémité 26b. Le conducteur 28 est raccordé à la borne 18 en son extrémité 28a et non raccordé en son extrémité 28b. Les conducteurs électriques isolés 24, 26 et 28 forment chacun une ligne ouverte sans aucun raccordement à leur extrémité 24b, 26b et 28b. En l'absence de raccordement des conducteurs en leur seconde extrémité, 24b, 26b et 28b, permettent d'adapter la ligne électrique 22 pour atténuer certains phénomènes électriques transitoires pouvant être présents sur le réseau 20 et transitant par la ligne électrique 22.

La mise en place de conducteurs 24, 26 et 28 de longueur infinie est équivalente à des résistances placées entre les bornes 14, 16 et 18. Plus précisément, les conducteurs électriques isolés forment une ligne ouverte possédant une impédance caractéristique. En plaçant entre chaque paire de bornes 14, 16 et 18 une résistance de même valeur que l'impédance caractéristique de la ligne ouverte, on obtient le même type d'atténuation des phénomènes transitoires se propageant sur la ligne 22. Cependant vues les tensions nécessaires aux bornes de la charge 12 pour la faire fonctionner, de telles résistances consommeraient une quantité d'énergie importante et sont donc à proscrire. Tout autre type de composant placé entre les bornes ou placés entre une des bornes et une masse électrique de l'architecture entrainerait également une consommation électrique importante que l'invention permet d'éviter.

De plus, les condensateurs ont généralement une fiabilité nettement moins bonne que celle d'une machine électrique telle qu'un moteur électrique bobiné. Par exemple, certains phénomènes électriques haute fréquence tendent à fatiguer les condensateurs. En revanche, les conducteurs 24, 26 et 28 et leur raccordement aux bornes 14, 16 et 18 sont d'une très grande fiabilité en tout cas bien meilleure que des condensateurs notamment vis-à-vis de phénomènes électriques haute fréquence.

De façon générale, de plus en plus de convertisseurs statiques sont mis en œuvre pour adapter la tension de réseaux vers le besoin des charges qui y sont raccordées. Ces convertisseurs permettent un gain de masse substantiel par rapport à des transformateurs classiques. Ces convertisseurs mettent en œuvre des interrupteurs électroniques hachant, à haute fréquence, la tension présente sur le réseau. Pour obtenir un bon rendement d'un convertisseur, il est intéressant de réduire au maximum la durée de transitions entre états ouvert et fermé des interrupteurs. De nouvelles générations de transistors, par exemple à base de carbure de silicium ou le nitrure galium permettent d'atteindre des durées de transition extrêmement courtes. Ces transitions rapides entrainent des variations temporelles de tension brutales qui sont généralement nocives pour les condensateurs censés les filtrer. En revanche, les conducteurs raccordés aux bornes 14, 16 et 18 ne vont subir aucun dommage à l'apparition de ces transitions tout en en assurant le filtrage du fait de l'adaptation de l'impédance de ligne.

Le fait de conserver les extrémités 24b, 26b et 28b non raccordée électriquement permet d'éviter que dans les conducteurs 24, 26 et 28 ne circule un courant électrique significatif, ce qui permet de mettre en œuvre des conducteurs de section très faible et en tout cas beaucoup plus faible que celle des conducteurs de la ligne électrique 22. Plus précisément, les machines électriques fonctionnent généralement en basse fréquence, par exemple à 400Hz à bord d'un aéronef et nécessitent des courants d'alimentation de l'ordre de l'ampère voire de la dizaine d'ampères circulant dans la ligne électrique 22. Les conducteurs 24, 26 et 28 sont raccordés à l'une de leur extrémité en parallèles de la ligne électrique 22. De ce fait, le courant principal d'alimentation de la charge 12 ne circule pas dans les conducteurs 24, 26 et 28 et de très faibles sections suffisent en comparaison des sections des conducteurs du câble 22. Ainsi, la masse ajoutée, du fait de la présence des conducteurs 24, 26 et 28, reste modérée.

Pour atténuer les effets des transitions rapides évoquées plus haut, il est également possible de mettre en place des inductances raccordées en série sur les conducteurs de la ligne électrique 22. Cependant, de telles inductances doivent supporter les courants importants alimentant la charge 12 et sont donc de masse importante. La mise en place des conducteurs 24, 26 et 28 permet de se passer de ces inductances et des tests faits en interne montrent que pour obtenir le même niveau de filtrage des transitions, la masse ajoutée par les conducteurs 24, 26 et 28 est beaucoup plus faible que celle des inductances séries placées sur la ligne électrique 22.

A titre d'exemple, pour un moteur électrique triphasé développant une puissance de l'ordre de 30 kW, des conducteurs 24, 26 et 28 d'une section de 0,2mm² et d'une longueur L1 de 10m ont donnés des résultats satisfaisants en matière de filtrage des transitions. L'effet d'atténuation des phénomènes transitoires est déjà notable à partir d'une longueur L1 de conducteurs d'un mètre. Pour des machines électriques de plus faible puissance, les mêmes longueurs de conducteurs sont également envisagées. L'effet d'atténuation est d'autant plus important que les phénomènes transitoires sont rapides.

En pratique, il est possible de proposer une charge 12 équipée de conducteurs isolés formant chacun une ligne ouverte de longueur L1 d'au moins 1m. Une telle charge peut s'adapter à tout type de ligne 22, quelle que soit sa longueur L2. La longueur L1 est définie pour chacun des conducteurs 24, 26 et 28 entre ses deux extrémités respectives. Les longueurs des trois conducteurs 24, 26 et 28 sont avantageusement identiques : L1. De même la longueur L2 est définie pour la ligne électrique 22 entre le convertisseur 30 et la charge 12. La ligne électrique 22 et les trois conducteurs 24, 26 et 28 peuvent s'étendre de façon rectiligne ou plus généralement suivre une courbe. Les longueurs respectives sont définies le long des courbes respectives.

Les conducteurs permettant alors une adaptation de la ligne électrique 22. Plus précisément, Vu de la ligne 22, l'impédance d'une charge tel que celle d'une machine électrique qui lui est raccordée est beaucoup plus grande que celle de la ligne électrique 22. Les conducteurs 24, 26 et 28, d'une longueur L1 minimale de 1m, assurent une adaptation ligne électrique 22. Autrement dit, à partir d'une longueur L1 d'un mètre environ, on peut considérer la ligne 22 accompagnée des conducteurs 24, 26 et 28, comme une ligne de longueur infinie dans laquelle des variations transitoires rapides de tension provenant du convertisseur 30 ne vont subir quasiment pas (ou très peu) de réflexion au niveau du raccordement de la ligne électrique 22 à la charge 12. De façon imagée, on peut dire que les variations transitoires vont s'évanouir dans les conducteurs 24, 26 et 28. Si l'on souhaite atténuer les effets de phénomènes transitoires plus lents, une longueur L1 minimale des conducteurs 24, 26 et 28 de 3 mètres est avantageuse. Pour une atténuation couvrant une plus large bande de phénomènes transitoires, une longueur L1 minimale de 5 m est encore meilleure.

Il est possible d'améliorer encore l'adaptation de la ligne électrique 22 en son raccordement à la charge 12 en réalisant des conducteurs électriques isolés 24, 26 et 28 avec une longueur L1 supérieure ou égale à une longueur L2 de la ligne électrique 22. Autrement dit, les conducteurs 24, 26 et 28 ont une longueur L1 minimale d'un mètre et sont avantageusement plus long si la ligne électrique 22 possède une longueur L2 supérieure à un mètre.

Les conducteurs 24, 26 et 28 ont avantageusement une section constante entre leurs deux extrémités respectives. Ceci permet d'une part de faciliter leur réalisation et d'autre part de maîtriser l'impédance caractéristique de la ligne ouverte formée par les conducteurs 24, 26 et 28.

Sur la figure 1, les conducteurs électriques 24, 26 et 28 sont essentiellement disposés à distance de la charge hormis bien entendu leur extrémité 24a, 26a et 28a raccordées aux bornes respectives 14, 16 et 18. Afin d'améliorer l'adaptation de ligne, les isolants des différents conducteurs sont sensiblement en contact les uns des autres sur la majeure partie de leur longueur L1.

Sur la figure 1, apparait également des inductances raccordées en série avec chacun des conducteurs 24, 26 et 28. Plus précisément, une inductance 34 est raccordée en série avec le conducteur 24, une inductance 36 est raccordée en série avec le conducteur 26 et une inductance 38 est raccordée en série avec le conducteur 28. Les inductances 34, 36 et 38 sont avantageusement placées au plus proche de la bornée concernée. Le courant d'alimentation principal de la charge 12 ne circule pas dans les inductances 34, 36 et 38 qui peuvent donc avoir une masse bien inférieure à des inductances placées en série sur les conducteurs du câble 22. Les inductances 34, 36 et 38 permettent aux conducteurs 24, 26 et 28 de mieux s'approcher de l'impédance caractéristique de la ligne électrique 22. Alternativement, il est possible de placer les inductances 34, 36 et 38, toujours en série avec les conducteurs 24, 26 et 28, mais cette fois au niveau des extrémités respectives 24b, 26b et 28b.

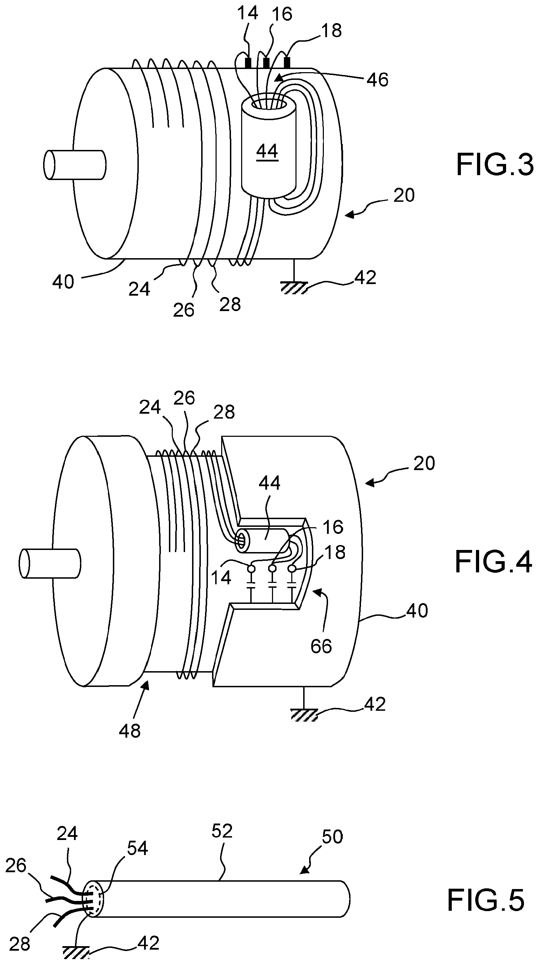

La figure 3 représente un premier mode de réalisation d'une architecture électrique selon l'invention. La charge 12 est également illustrée par une machine électrique triphasée. Pour ne pas alourdir la figure le raccordement électrique au réseau 20, par l'intermédiaire du convertisseur 30, n'est pas représenté. Tout comme dans la représentation de principe de la figure 1, les conducteurs électriques 24, 26 et 28 représentés sur la figure 3 sont formés de fils électriques isolés classiques vendus dans le commerce. Comme évoqué plus haut il est possible de choisir des fils individuels de section environ 0,2mm². Cette section est connue dans la littérature anglo-saxonne sous le nom de jauge AWG 24, AWG signifiant « American Wire Gauge ». L'isolation de chacun des fils peut être réalisée classiquement à base de PVC ou de PTFE si une tenue en température plus élevée est souhaitée. L'isolation de chacun des conducteurs 24, 26 et 28 n'est éliminée qu'au niveau de leur extrémité 24a, 26a et 28a pour assurer le raccordement sur les bornes respectives 14, 16 et 18. En leur extrémité 24b, 26b et 28b, il est possible de compléter l'isolation par un capuchon adapté afin que seule l'extrémité 24a, 26a et 28a sont raccordée électriquement.

La machine électrique 12 représentés sur la figure 3 comprend une carcasse 40 métallique à l'intérieure de laquelle est fixé le stator de la machine électrique 12. La carcasse 40 est raccordée à une masse électrique 42 de l'architecture 10. A la différence de la figure 1, sur la figure 3, les conducteurs électriques isolés 24, 26 et 28 sont entourés autour de la carcasse 40. Cet enroulement permet de ranger plus facilement les conducteurs 24, 26 et 28.

Sur la figure 3, les inductances 34, 36, 38 sont regroupées au moyen d'un noyau magnétique torique 44 formé autour d'un évidement central 46. Le noyau magnétique 44 est par exemple réalisé en matériau ferromagnétique. Les trois conducteurs 24, 26 et 28 traversent une ou plusieurs fois l'évidement central 46 en fonction de la valeur d'inductance souhaitée.

La figure 4 représente une variante du premier mode de réalisation dans laquelle la carcasse 40 comprend une rainure 48 annulaire dans laquelle les conducteurs 24, 26 et 28 sont disposés. Sur la figure 4, les conducteurs sont enroulés dans la rainure 48 sur une seule couche. Il est également possible de les enrouler sur plusieurs couches. Les dimensions de la rainure 48 sont déterminées de façon à y permettre le rangement complet des conducteurs 24, 26 et 28. Un capot, non représenté, peut éventuellement recouvrir les conducteurs 24, 26 et 28 afin de les protéger. La rainure 48 peut être prolongée pour accueillir les bornes 14, 16 et 18 ainsi que le noyau magnétique 44. Le rangement des conducteurs 24, 26 et 28 permet de maîtriser leur position entre eux et par rapport à la carcasse 40. La maîtrise des positions relatives permet la maîtrise de l'impédance caractéristique de la ligne formée par les conducteurs 24, 26 et 28.

La figure 5 représente un câble 50 regroupant les conducteurs 24, 26 et 28. Comme évoqué plus haut, le nombre de conducteurs inclus dans le câble dépend du nombre de bornes de la charge. A l'intérieur du câble 50, les conducteurs 24, 26 et 28 peuvent être alignés ou torsadés. Le câble 50 maintient les conducteurs 24, 26 et 28 à l'intérieur d'une gaine extérieure 52. La mise en œuvre du câble 50 permet de maitriser la position relative des conducteurs 24, 26 et 28 entre eux. La maîtrise de la position des conducteurs 24, 26 et 28 permet de maîtriser l'impédance caractéristique des conducteurs 24, 26 et 28 afin que cette impédance s'approche au mieux de celle de la ligne électrique 22. Par rapport à un rangement individuel des conducteurs 24, 26 et 28 tel que décrit à l'aide des figures 3 et 4, l'utilisation d'un câble 50 permet de réduire les coûts de main d'œuvre en achetant un câble dans le commerce. L'utilisation d'un câble fiabilise également le rangement qui est moins soumis au facteur humain. Le câble 50 peut également inclure un blindage conducteur 54 entourant les conducteurs 24, 26 et 28. Ce blindage peut être laissé flottant ou raccordé à la masse 42. Le blindage 42 permet d'adapter l'impédance caractéristique de la ligne formée par les conducteurs 24, 26 et 28. Le câble 50 blindé peut également être mis en œuvre comme représenté sur la figure 1 où les conducteurs 24, 26 et 28 ne sont pas enroulés au tour de la carcasse 40.

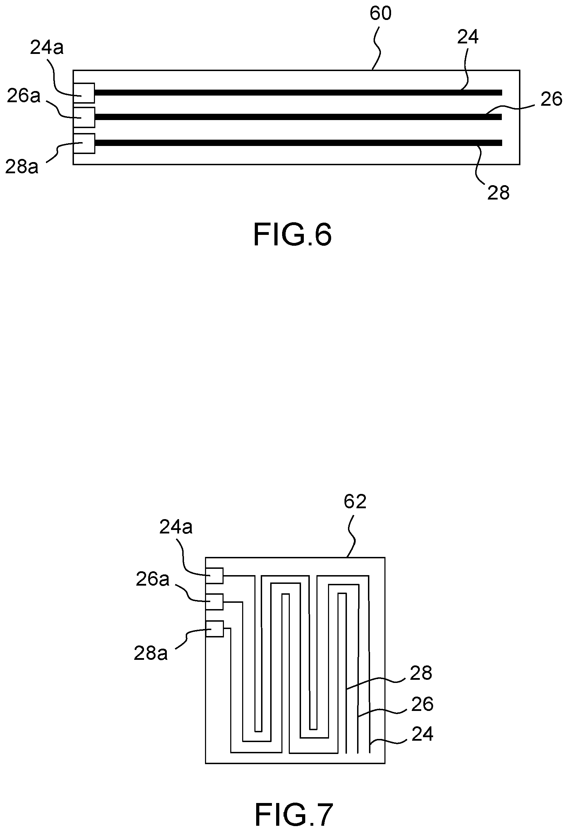

Les figures 6 et 7 représentent deux variantes de circuits imprimés flexibles sur lesquels sont réalisés les conducteurs 24, 26 et 28. Sur la figure 6, sur le circuit imprimé 60, les conducteurs 24, 26 et 28 s'étendent de façon rectiligne chacun à partir d'un plot de connexion formant la première extrémité du conducteur, respectivement 24a, 26a et 28a. Sur la figure 7, sur le circuit imprimé 62, les conducteurs 24, 26 et 28 s'étendent en serpentant. Comme dans la variante de la figure 5, où un câble 50 est utilisé, la mise en œuvre de circuits imprimés permet de bien maîtriser la position relative des conducteurs 24, 26 et 28 entre eux.

Les circuits imprimés flexibles 60 et 62 peuvent être réalisés à partir de films polyimides également connu sous le nom de Kapton. La mise en œuvre d'un circuit imprimé 60 ou 62 permet de garantir la position relative des conducteurs 24, 26 et 28 entre eux. La flexibilité des circuits imprimés 60 et 62 permet un rangement facile des conducteurs 24, 26 et 28, par exemple autour de la carcasse 42. L'épaisseur des circuits imprimés 60 et 62 est généralement bien plus faible que celle de fils mis en œuvre pour réaliser les conducteurs 24, 26 et 28 dans le mode de réalisation des figures 3, 4 et 5. Cette épaisseur faible permet d'autres rangements des conducteurs 24, 26 et 28 dans l'architecture 10. En complément de pistes formant les conducteurs 24, 26 et 28, les circuits imprimés 60 et 62 peuvent comprendre plusieurs couches, une couche pour les pistes et une ou deux autres couches comprenant des plans de masse remplissant la fonction du blindage 54.

En complément des conducteurs 24, 26 et 28, il est possible d'ajouter des condensateurs 66 par exemple raccordés entre d'une part les bornes 14, 16 et 18 et d'autre part la masse 42. Alternativement ou en complément, les condensateurs 66 peuvent être raccordés entre les bornes 14, 16 et 18. Les condensateurs 66 permettent de filtrer certaines perturbations électromagnétiques provenant de la charge 12.

## Revendications

1. Architecture électrique comprenant :
• une charge (12) équipée de bornes d'alimentation (14, 16, 18) permettant son raccordement à une ligne électrique (22) de l'architecture,
• en complément du raccordement à la ligne électrique (22) et associé à chacune des bornes d'alimentation (14, 16, 18), un conducteur électrique isolé (24, 26, 28) raccordé à une première de ses extrémités (24a, 26a, 28a) à la borne considérée (14, 16, 18) et non raccordé à une seconde de ses extrémités (24b, 26b, 28b), les conducteurs électriques isolés (24, 26, 28) ayant une longueur (L1) supérieure ou égale à 1m.

2. Architecture électrique selon la revendication 1, dans laquelle les conducteurs électriques isolés (24, 26, 28) ont une section constante entre leurs deux extrémités respectives (24a, 26a, 28a, 24b, 26b, 28b).

3. Architecture électrique selon l'une des revendications précédentes, dans laquelle, les conducteurs électriques isolés (24, 26, 28) ont une longueur (L1) supérieure ou égale à 3m.

4. Architecture électrique selon l'une des revendications précédentes, comprenant en outre un convertisseur d'énergie mettant en œuvre des interrupteurs électroniques relié à la ligne électrique (22) et pouvant alimenter la charge (12), dans laquelle, les conducteurs électriques isolés (24, 26, 28) ont une longueur (L1) supérieure ou égale à une longueur (L2) de la ligne électrique (22).

5. Architecture électrique selon l'une des revendications précédentes, comprenant en outre, associé à chacun des conducteurs électriques isolés (24, 26, 28), une inductance (34, 36, 38) raccordée en série avec le conducteur électrique isolé considéré (24, 26, 28).

6. Architecture électrique selon la revendication 5, comprenant en outre un noyau magnétique torique (44) formé autour d'un évidement central (46) et dans laquelle les conducteurs électriques isolés (24, 26, 28) traversent une ou plusieurs fois l'évidement central (46).

7. Architecture électrique selon l'une des revendications précédentes, comprenant en outre, en complément des conducteurs électriques isolés (24, 26, 28), au moins un condensateur (66) raccordé aux bornes d'alimentation (14, 16, 18).

8. Architecture électrique selon l'une des revendications précédentes, dans laquelle la charge (12) est une machine électrique comprenant une carcasse statorique (40) et dans laquelle les conducteurs électriques isolés (24, 26, 28) sont enroulés autour de la carcasse (40).

9. Architecture électrique selon l'une des revendications précédentes, dans laquelle les conducteurs électriques isolés (24, 26, 28) sont formés de fils électriques isolés et dans laquelle les isolants des différents fils électriques sont sensiblement en contact les uns des autres sur la majeure partie de leur longueur (L1).

10. Architecture électrique selon l'une des revendications précédentes, dans laquelle les conducteurs électriques isolés (24, 26, 28) sont regroupés au sein d'un câble (50).

11. Architecture électrique selon la revendication 10, dans laquelle le câble (50) est blindé et dans laquelle le blindage (54) du câble (50) est raccordé à une masse (42) de l'architecture (10).

12. Architecture électrique selon l'une des revendications 1 à 9, dans laquelle les conducteurs électriques isolés (24, 26, 28) sont formés sur un circuit imprimé flexible (60, 62).
